# EUROPEAN PATENT SPECIFICATION

(11) **EP 2 615 903 B1**
(45) Date of publication and mention of the grant of the patent: **03.05.2017**
(21) Application number: 11712350.5
(22) Date of filing: 23.02.2011
(51) Int. Cl.: A01D 34/73

(54) **LAWN MOWER WORKING HEAD FOR GARDEN WORK**
ARBEITSKOPF EINES RASENMÄHERS FÜR GARTENARBEITEN
TÊTE DE TRAVAIL DE TONDEUSE À GAZON DESTINÉE À DES TRAVAUX DE JARDINAGE

(30) Priority: 13.09.2010 PL 39237810
(43) Date of publication of application: 24.07.2013
(73) Proprietor: Chilik Mieczyslaw Firma Produkcyjno-Handlowo- Uslugowa Polchimet, 38-400 Krosno (PL); Chilik, Mieczyslaw, 38-430 Miejsce Piastowe (PL)
(72) Inventor: Chilik, Mieczyslaw, 38-430 Miejsce Piastowe (PL)
(74) Representative: Warzybok, Tadeusz
(86) International application number: PCT/PL2011/000024
(87) International publication number: WO 2012/036572

(56) References cited:
- FR-A1- 2 262 485
- FR-A1- 2 686 031
- US-A- 3 293 836
- US-A- 3 621 642
- US-A- 4 083 166

## Description

The subject of the invention consists in a working head for lawn mower that can be used for garden work related to lawn mowing and cleaning, in particular cutting grass, picking up leafs, lawn cleaning and tree branch cutting and shredding, mounted on a combustion-engine driven lawn mower.

Known from description of US patent US 3621642 is the rotating cutting head assembly for lawn mowers comprising flat circular disc with bore formed centrally and outwardly sloping annular ring on its outer edge, to which two flat bars perpendicularly oriented with respect to each other, whereas all said outwardly sloping surfaces of the annular ring of the disc, end portions of the flat bars are joined with the annular ring by means of a pair of rivets. In the slit formed between the bent portion of the disc and the annular ring there are cutter blades with sharpened edge pivotally secured to the annular ring of the disc by a rivet so the blades can move rotationally in the slit in the case of contact with a hard object in the course of lawn mowing. Moreover, there are radially extending air impeller blades secured to the ring between the flat bar elements and playing the role of lawn aerators, while rotating blades are also distributed symmetrically on perimeter of the disc.

The above-described the rotary cutter head assembly for lawn mowers has a limited area of application as it is designed only for lawn mowing and aeration. The assembly lacks the function making possible to pick up leaves, simultaneous cleaning and aerating lawns, or cutting and shredding tree branches, and such lack of versatility is the main fault of the device.

Description of US patent No. US3293836 reveals a design of lawn mower with conical rotating disc equipped, on inner side, with cutting blades with transverse cross-section having the shape of stylized letter "S", and said rotating disc being connected by means of a drive shaft directly to the electric motor. Moreover, said disc has holes through which the mowed grass of thrown into the conical shell surrounding said disc, as a result of which the mowed grass clogs the holes in the disc and sticks around the blades thus blocking rotational motion of the disc and requiring the disc to be cleaned immediately.

Description of British patent No. GB 524834 reveals a lawn mower with rotating disc attached to drive shaft and provided with at least two pivotally mounted cutting blades having, in the bottom view, the shape of elongated triangles and provided with cutting edges on both sides. In the course of rotational motion of the disc, the blades, under centrifugal force, take radial position, with at least a portion of the cutting edge thereof extending outside the outer edge of the disc allowing to cut grass, and thanks to cutting edges existing on both sides of blades, the lawn mower may operate at both directions of rotational motion.

Description of Polish patent No. 174576 reveals a design of lawn mower equipped with drive shaft to which a cutting tool is attached consisting of rotating disc and rectangular cutting blades pivotally mounted thereto and sticking outside circumference thereof, with cutting edges of said blades directed towards direction of rotation of the disc, characterized in that each of the blades is bent down in its central part at angle of about 10°, while the rear part of each blade is also bent down at an angle less than the angle of bending of the central part and amounting to about 5°. Further, the blade relief angle is inclined at the angle of 45° with respect to the cutting blade's flat surface leading angle. Thanks to such shape, blades of the cutting tool act as propellers in the course of rotation and press the air downwards, lifting the lawn mower over the surface of earth. After mounting blades to the mower disc and switching the drive on, pivotally mounted blades are subject to action of centrifugal force and take radial position sticking outside the disc housing, while cutting edges of the blades pointing towards the disc rotation direction. In the course of grass cutting, the pivotally mounted blades deflect under action of cutting resistance forces from their radial position, and after release of the resistance they again take radial position under action of centrifugal forces, as a result of which the blades are protected against damage in case of encountering excessive resistance, caused by e.g. striking a bush root.

Further, description of Polish utility model No. 55958 reveals a blade for lawn mower characterized in that it has a holder provided with transversally pressed reinforcement rib with circular hole, and on extension of said holder having a cascade offset there is a cutting component, constituting a flat arm containing on one side an oblique blade, while one of corners of the arm is slightly bent back obliquely towards the edge, and between the cascade offset and the flat arm there is a profiled transverse slot.

The objective of the present invention consists in providing a simple and compact design of working head for lawn mower with increased versatility consisting in possibility to use it with well known and commonly used types of lawn mowers. In particular, an objective if this invention consists in providing a mower working head design characterized with high rigidity and mechanical strength allowing for replaceable mounting of different cutting blades and aerators for, according to current needs, mowing grass, picking up leafs, cleaning and aerating lawns, or cutting and shredding tree branches.

The lawn mower working head for garden work according to the invention is characterized in that its rotating disc constituting the head body is connected detachably and pivotally, by means of bolts located in bean-shaped holes made in said body, with at least two cutting blades for lawn mowing with the possibility to replace them with at least two blades for picking up leaves, and further said disc is connected also pivotally with two short aerator assemblies located between said blades with the possibility to replace them with two long aerator assemblies for lawn cleaning and aerating, while the lower surface of the disc is connected detachably with at least two cutting blades for cutting and shredding branches, whereas the blades and aerator assemblies of any of the two types are distributed symmetrically along perimeter of the disc face, and cutting blades are distributed symmetrically on its lower surface. Rotating disc of said head has the form of a circle provided with a pressed bean pointing upwards with quasi-annular shape, outer edge of which has four equally distributed semicircular hollows situated in the plane of the circumferential hollow ended with its outside edge bent upwards. Further, inside said pressed bean, there is an axial circular hollow, bottom of which has an axial mounting hole and two assembly bean-shaped holes located opposite each other, while the surface of the pressed bean has symmetrically distributed seats in the form of parallelograms with two protrusions pressed therein and provided with holes, and along longer sides of said seats there are parallelogram recesses parallel to said seats, and on axes of the semicircular hollows, conical protrusions are fabricated with axial profiled bean-shaped mounting holes, under which there are conical seats used for mounting cutting blades and aerators. The cutting blade for lawn mowing has the cutting edge sharpened preferably at the angle of α = 15-30°, and on the opposite side it is provided with arched offset pointing upwards, starting at the point located at about 1/2 of width "L" of the blade's front face, while the blade for picking up leafs has higher arched offset pointing upwards and starting at the point located at about 1/3 of width "K" of the front face of said blade. The short aerator assembly for lawn cleaning and aeration constituting a replaceable fitting to the head consists of a stirrup having, in the side view, the shape of letter "U", lower horizontal shelf of which is connected permanently with a pin threaded on one end, while both vertical shelves perpendicularly positioned with respect to said horizontal shelf are provided with through holes situated coaxially with respect to each other, with a bolt located in said holes and a bushing planted on said bolt, and with aerator spring positioned on said bushing, said spring consisting of two outer coils of wire joined in the central part by means of an elongated bend of U-shaped profile and elongated straight ends of both coils of said spring protruding outside, while the other end of the bolt is provided with washer and nut. Further, the long aerator assembly for lawn cleaning and aeration has lower horizontal flat-bar shelf protruding outside the inner vertical shelf of the stirrup of said aerator. Still further, the blade (47) for branch cutting and shredding has a form of parallelogram plate with at least one of its longer sides sharpened at angle *β* = 15-30° and two mounting holes with diameter and spacing "N" identical to those of holes made in the disc body's seats.

Basic advantage of the mower working head according to the invention consists in its high versatility allowing to use it for carrying out at least for types of work related to keeping lawn in proper condition and including proper grass trimming, picking up leafs, cleaning and aerating the lawn, as well as cutting and shredding of unwanted tree branches. Possibility to execute work of that type is provided as a result of designing a set of exchangeable tools mounted on a single multi-purpose disc body of said head. The use of pivotally mounted cutting blades in the mower working head allowed to protect the mower's drive shaft from bending in the case of the blades striking an obstacle in the form of e.g. a stone lying in the grass, tree stump, or border post. Further, providing the blades for picking up leafs with appropriate bend increasing their surfaces allowed to produce an increased pressure used for throwing the picked up leafs directly to the mower's basket, while mounting two aerator assemblies in the disc body instead of two blades for picking up leafs, allows to clean and aerate lawns at the same time. Still further, providing the head's disc body with four parallelogram seats having side recesses allows to mount on the body, depending on current needs, two or four blades specially designed for cutting and shredding of unwanted tree branches. Apart from high versatility of the proposed head, its simple and compact design allows to limit the number of component parts to a necessary minimum and therefore significantly reduces the cost of manufacturing thereof.

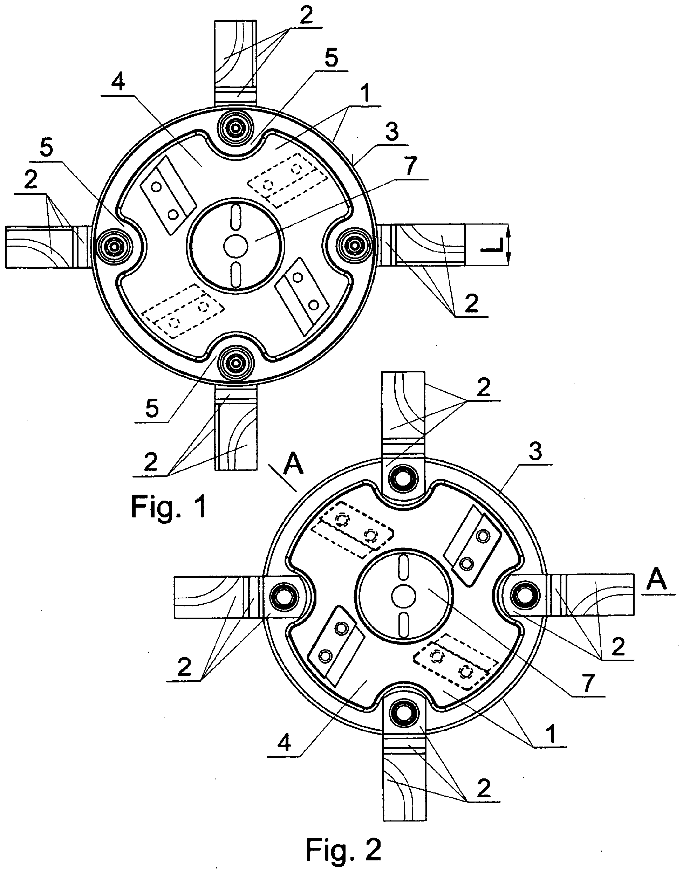

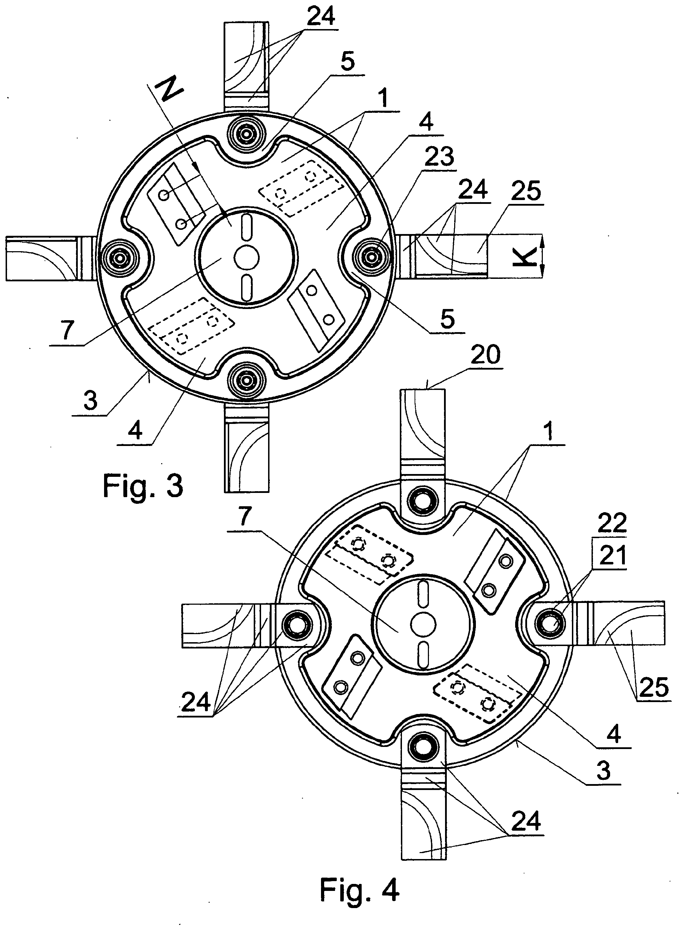

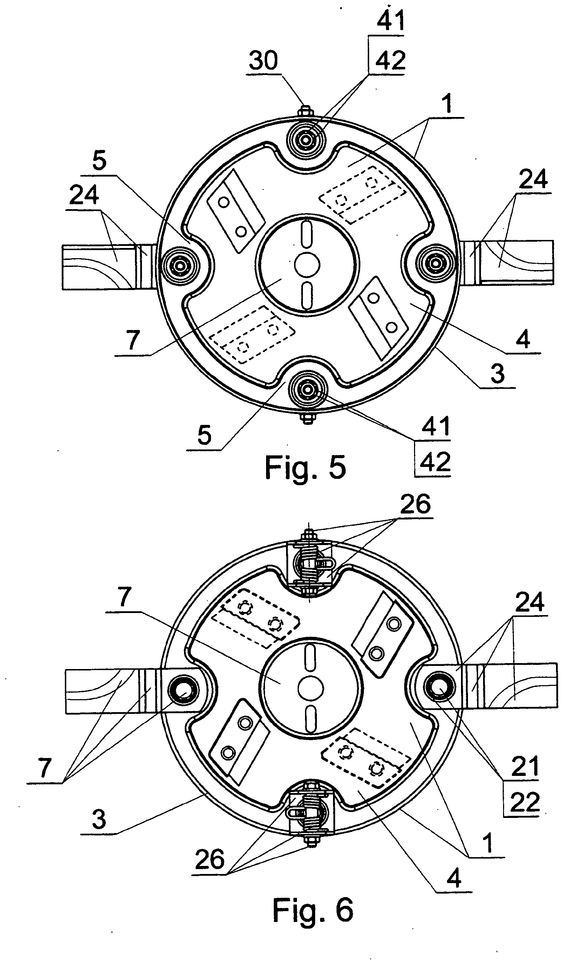

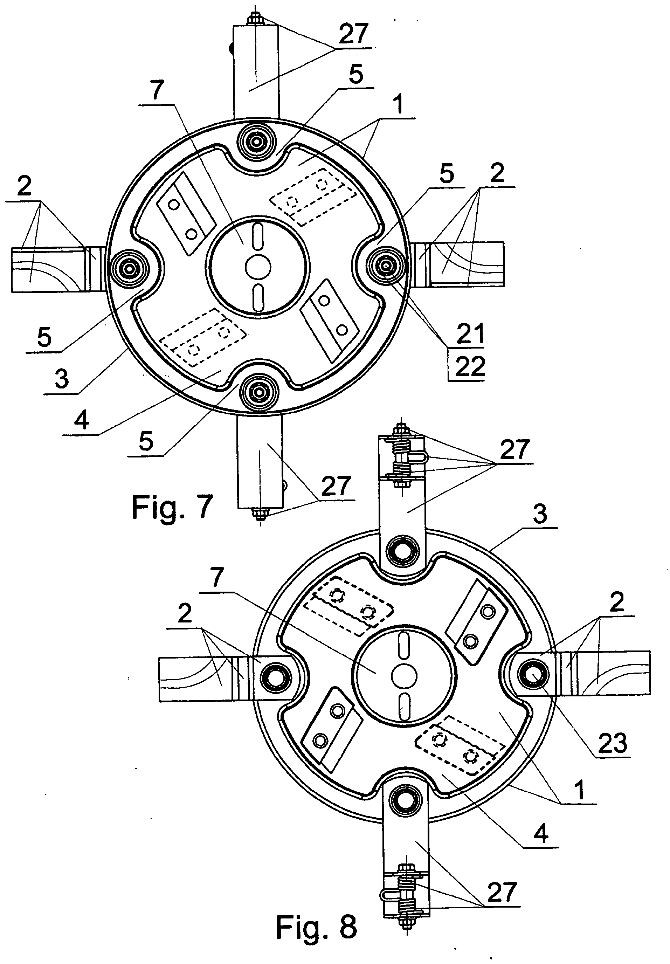

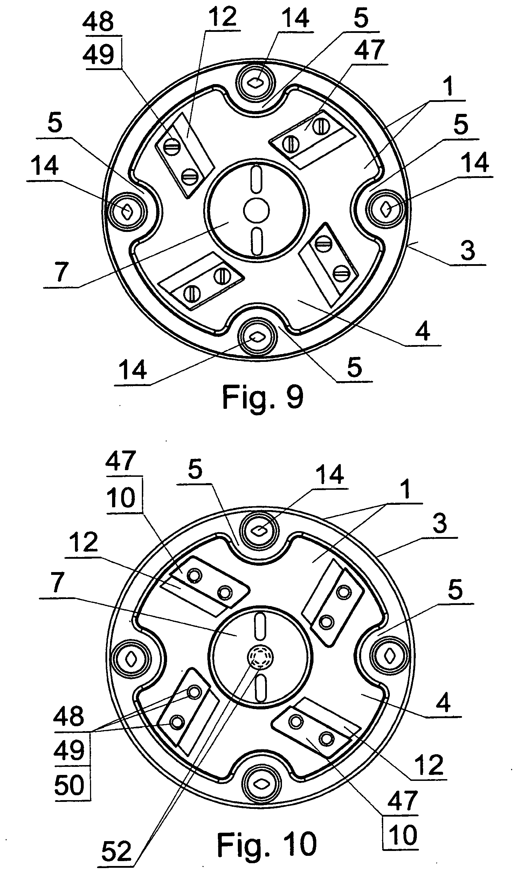

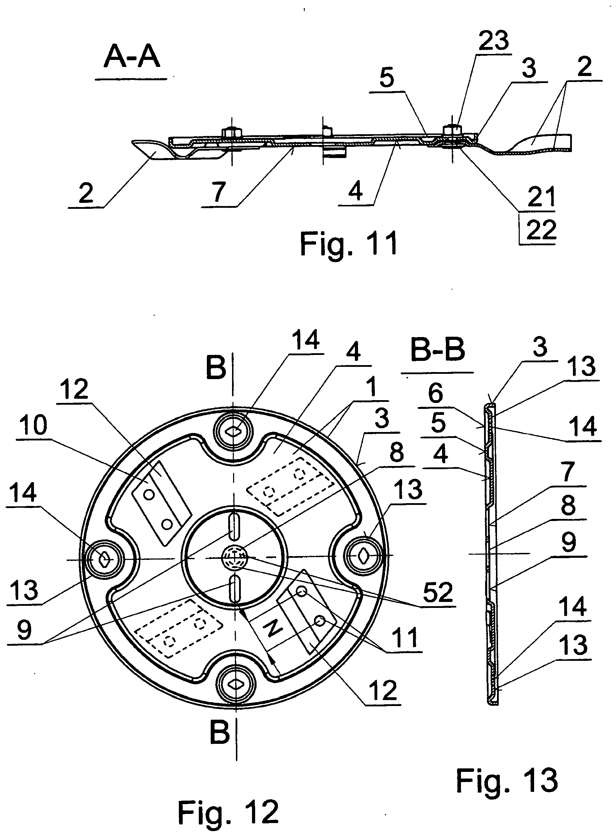

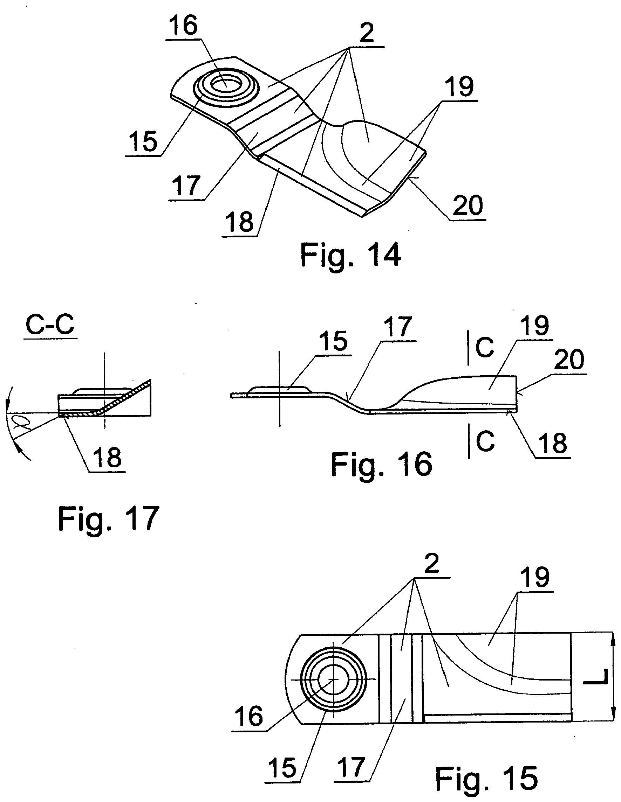

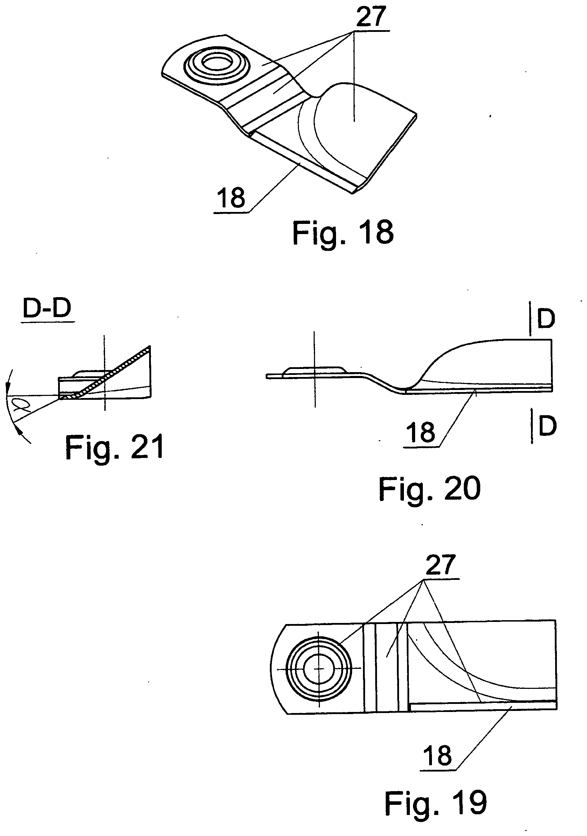

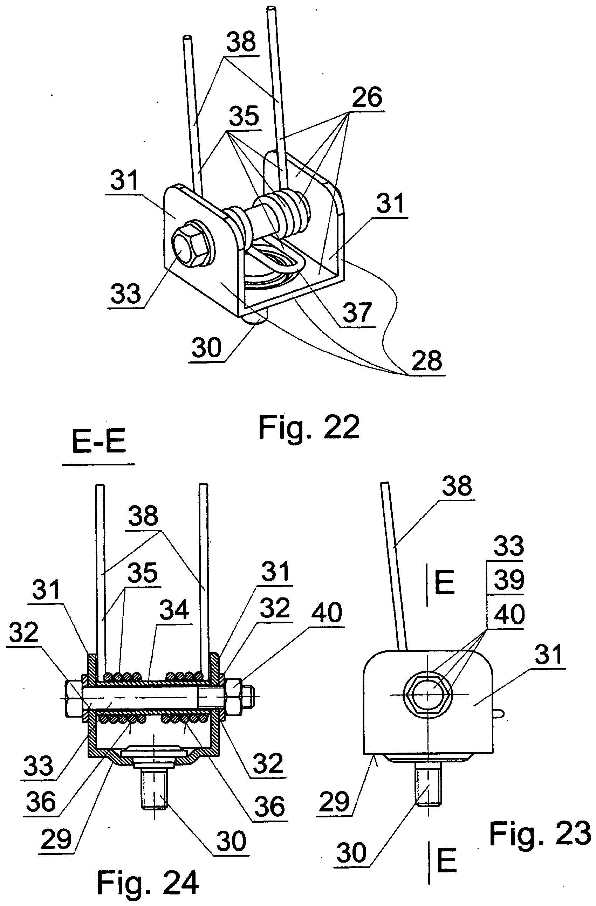

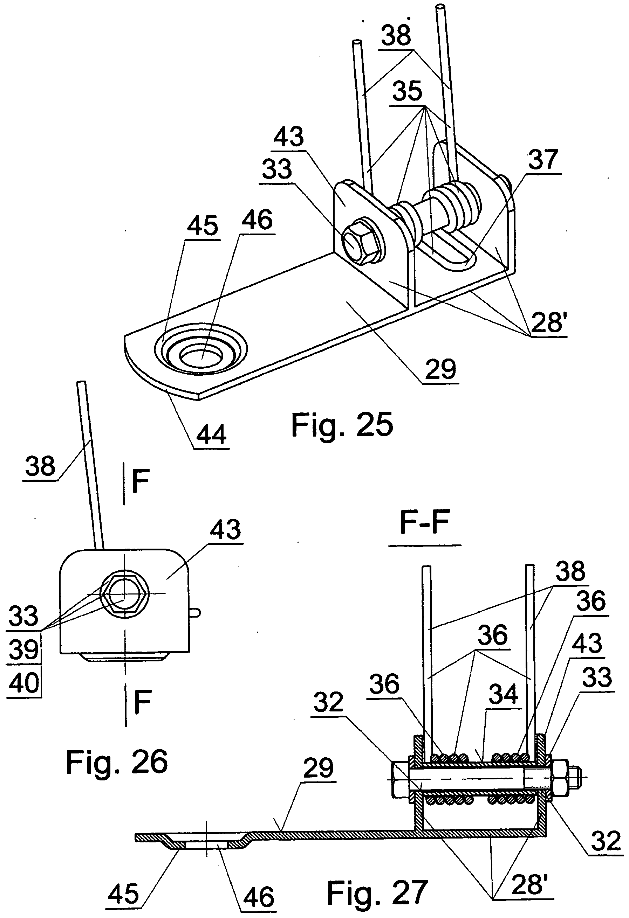

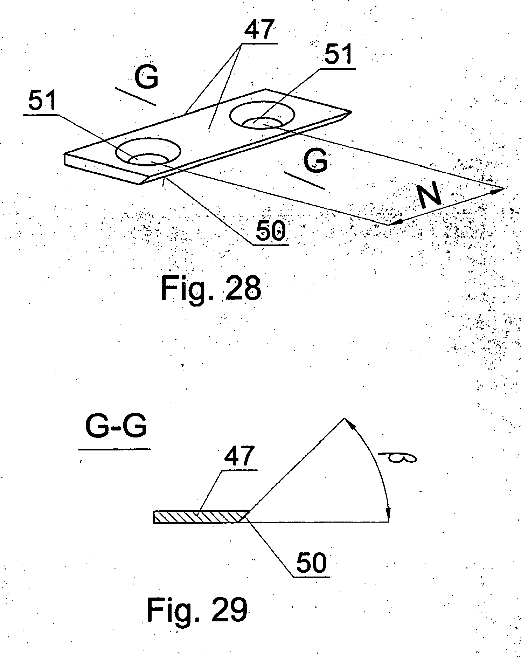

The subject of the invention has been depicted in the form of realization examples shown in figures, of which Fig. 1 shows the working head of the mower with four cutting blades for lawn mowing in the top view; Fig. 2 - the same head in the bottom view; Fig. 3 - the mower working head with four blades for picking up leafs in the top view; Fig. 4 - the same head in the bottom view; Fig. 5 - the mower working head with two cutting blades for lawn mowing and two aerators for lawn cleaning and aerating covered with the head disc in the top view; Fig. 6 - the same head in the bottom view; Fig. 7 - the mower working head with two blades for grass cutting and two aerators used also for lawn cleaning and aerating but more offset from the head, in the top view; Fig. 8 - the same head in the bottom view; Fig. 9 - the mower working head with four blades for branch shredding in the top view; Fig. 10 - the same head in the bottom view; Fig. 11 - the same working head in horizontal cross-section along line A-A in Fig. 2; Fig. 12 - the head disc in the top view; Fig. 13 - the same disc in vertical cross-section along line B-B; Fig. 14 - working head blade for lawn mowing in the perspective view; Fig. 15 - the same blade in the top view; Fig. 16 - the same blade in the side view from outside; Fig. 17 - the same blade in vertical cross-section along line C-C; Fig. 18 - working head blade for picking up leafs, in the perspective view; Fig. 19 - the same blade in the top view; Fig. 20 - working head blade for cutting branches in the side view from outside; Fig. 21 - the same blade in vertical cross-section along line D-D; Fig. 22 - the short aerator assembly for lawn cleaning in the perspective view; Fig. 23 - the same aerator assembly in the side view; Fig. 24 - the same aerator assembly in cross-section along line E-E; Fig. 25 - the long aerator assembly for lawn cleaning in the perspective view; Fig. 26 - the same long aerator assembly in side view; Fig. 27 - the same aerator assembly' cross section along F-F line; Fig. 28 - blade for branch cutting and shredding in perspective view; and Fig. 29 - the same blade in vertical cross-section along line G-G.

The lawn mower working head shown in Figs. 1, 2, 9, 12 and 14 consists of the disc body (1) and two or four blades (2) distributed uniformly on the circumference of said body. The disc body (1) has the shape of a circle with the edge (3), in the side view, folded upwards, and its inner surface has a profiled stiffening bead (4) with a quasi-annular shape, outer edge of which has four semicircular hollows (5) distributed symmetrically on its circumference, horizontal planes of which are coplanar with horizontal ring-shaped surface (6) adjacent to the bent up stiffening edge (3), and, further, inside the annular bead (4) there is a circular hollow (7), bottom of which has an axially situated circular mounting hole (8) and two bean-shaped holes (9) situated opposite to each other, while on the surface of the bead (4) there are uniformly distributed two or four identical seats (10) in the form of parallelograms with two holes (11) punched in them, with parallelogram recesses (12) adjacent to their longer sides; further, on surfaces of semicircular hollows (5), there are protrusions (13) pointing upwards in the form of truncated cones provided with a bean-shaped mounting holes (14).

The blade for lawn mowing (2) has, in the top view, the form of a rectangle plate with one of its shorter sides rounded and the top flat surface provided with protrusion (15), in the form of truncated cone with hole (16) with the same conical profile as protrusion (13) of the disc body (1), and has a slanting offset (17) evolving into a lower flat surface, one side of which has the edge (18) at angle *α* amounting to about 15° and plays the role of the cutting blade, while the opposite side has an arched offset (19) pointing upwards and starting at the point located at about a half of width "L" of the front face (20) of said blade, that facilitates collection of the mowed grass. Mounting of said blades on the disc body (1) consists in that conical protrusions (15) of blades (2) are placed in conical protrusions (13) of said body, and then, through holes (14 and 16) thereof, the blades are attached to the body by means of bolts (21) and spring washers (22) secured with nuts (23).

In another embodiment, edge of blade (2) is sharpened at angle *α* of about 30°.

The lawn mower working head for picking up leafs from lawns and throwing them to a basket, shown in Figs. 3, 4 and 18, consists of the disc body (1) identical to that of the head used for lawn mowing, and special blades (24) connected thereto with shape similar to that of blades (2). The difference between the two blade types consists in the fact that blades (24), contrary to blades (2), have a higher arched bend (25) pointing upwards and starting at the point located at about 1/3 of width "K" of the front face (20) of blade of that type. Increased surface of the bend (25) of this blade type results in increase of pressure occurring in the course of rotational motion of the head mounted in combustion-engine driven lawn mower after dismounting earlier the cutting blades (2).

The lawn mower working head used for lawn cleaning and aeration shown in Figs. 5-8 and Figs. 22-25 consists also of identical disc body (1) provided with two blades (24) identical to those used for picking up leafs, but between said blades, two short aerator assemblies (26) or long aerator assemblies (27) are detachably mounted to said body. The short aerator assembly (26) consists of a stirrup (28) having, in the side view, the shape of letter "U", lower horizontal shelf (29) of which is permanently connected to the pin (30) threaded on one end, while both vertical shelves (31) perpendicularly positioned with respect to said horizontal shelf are provided with through holes (32) situated coaxially with respect to each other, with a bolt (33) located in said holes and bushing (34) planted on said bolt, with aerator spring (35) positioned on said bushing, said spring consisting of two coils of wire (36) joined in the central part by means of an elongated bend (37) with U-shaped profile and elongated straight ends (38) of both coils (36) of said spring protruding outside, while the other end of the bolt (33) is provided with washer (39) and nut (40). Threaded ends of pins (30) of both short aerator assemblies (26) are placed in holes (14) of conical protrusions (13) of the disc body (1), and protruding ends of the pins are provided with bearing washers (41) resting on flat surfaces of said protrusions and pressed against them with tightening nuts (42).

On the other hand, the long aerator assembly (27) consists also of a stirrup (28') having, in the side view, the shape of letter "U", lower horizontal flat-bar shelf (29) of which is significantly extended outside the inner vertical shelf (43) of said stirrup, and this protruding end has a rounded side (44) and a pressed hollow (45) in the form of truncated cone with an coaxial circular mounting hole (46), while the profile of both the conical hollow (45) and its hole (46) are adapted to profiles of protrusions (13) and holes (14) of the disc body (1) cooperating therewith. Moreover, also in the case of this type of aerator, vertical shelves (43) of the U-shaped stirrup (28') are provided with through holes (32) situated coaxially with respect to each other, with bolt (33) located in said holes with bushing (34) planted on said bolt, with aerator spring (35) positioned on said bushing, said spring consisting of outer coils of wire (36) joined in the central part by means of an elongated bend (37) with U-shaped profile and elongated straight ends (38) of both coils (36) of said spring protruding outside, while the other end of the bolt (33) is provided with washer (39) and nut (40). Use of the aerator (27) with longer arm more distant from the rotating head's disc body (1) results in increased working width of said head.

Further, the mower working head for branch cutting and shredding is shown in Figs. 9, 10, 12, 13 and 28 consists also of the disc body (1) identical to that of the head used for lawn mowing and shown in Figs. 1 and 2 and, depending on current needs, two or four cutting blades (47) located in parallelogram seats (10) with two holes (11) and mounted in said seats through said holes by means of bolts (48) with spring washers (49) and nuts (50). The blade (47) for branch cutting and shredding has the form of a parallelogram plate with one of longer sides (5) sharpened at angle *β* = 15-30° depending on thickness of branches to be cut, while its surface is provided with two mounting holes (51) with diameter and spacing "N" identical to those of holes (11) made in the seat (10) of the disc body (1). In another embodiment, the blade (47) has both longer sides sharpened at angle *β*.

After mounting a set of cutting blades (2,24,47) and/or aerators (26) or (27), appropriate to garden work planned to be carried out by means of a combustion-engine driven lawn mower, on the disc body (1), the mower working head according to present invention is the mounted on the drive shaft of a lawn mower of given type using for that purpose the selection rings (52) in which the head is equipped, with at least one of said rings, depending on the need, located in hole (8) of the disc body (1) positioned on said shaft. If lawn mowing is necessary, regular cutting blade or blades are to be dismounted from a combustion-engine driven lawn mower and on the drive shaft thereof, the head is to be mounted with the disc body (1) equipped with four pivoting cutting edges (2) with shape appropriate for picking up leafs or shredding tree branches, while when it is necessary to pick up leafs from a lawn, instead of the pivoting cutting edges (2), special blades (24) can be mounted with increased surface area resulting in occurrence of pressure allowing to pick up and throw leafs to the mower's basket. In turn, when lawn cleaning and aeration is necessary, instead of two cutting blades (24) for picking up leafs, two short (26) or long (27) aerator assemblies can be mounted depending on the working width required, while in the case when shredding of branches is required, only two or four cutting blades (47) can be mounted on the mower head's disc body (1) allowing to cut and shred branches with diameter of up to about 40 mm. At the same time, in case of branch cutting and shredding by means of cutting blades (47) it shall be necessary to install an appropriate guide, not shown in the figure, on the lawn mower casing that will allow to introduce the branches and press them against the cutting blades, and under said casing, an appropriate lid should be mounted, also not shown in the figure, allowing, with the use of pressure the pressure generated, to throw shredded branches to the mower's basket.

## Claims

1. A lawn mower working head for garden work consisting of a rotating disc (1) equipped with blades (2) for cutting grass protruding outwards from its face and connected with said disc detachably and pivotally by means of bolts (21) said disc equipped further with assemblies (26 and 27) for aeration of lawns that together with said blades are distributed symmetrically along perimeter of said disc **characterized in that** the rotating disc (1) constituting the body of the head is connected detachably and pivotally by means of bolts (21) located in bean-shaped holes (14) of said body with at least two blades (2) for mowing with the possibility to replace them with at least two blades (24) for picking up leafs and is also connected pivotally at locations between said blades with two short aerator assemblies (26) that can be replaced with long aerator assemblies (27) for lawn cleaning and aerating, and further the lower surface (4) of the disc (1) is connected detachably with at least two cutting blades (47) for branch cutting and shredding, whereas blades (2 and 24) mounted to said body and aerator assemblies (26 and 27) are distributed symmetrically along perimeter of the disc face, and cutting blades (47) are distributed symmetrically on its lower surface (4).

2. A working head according to claim 1 **characterized in that** the rotating disc (1) has the shape of a circle provided with profiled stiffening bead (4) pointing upwards with a quasi-annular shape outer edge of which has four semicircular hollows (5) distributed symmetrically on its circumference, horizontal planes of which are coplanar with horizontal ring-shaped surface (6) adjacent to the bent up stiffening edge (3), inside the annular bead (4) there is a circular hollow (7), bottom of which has an axially situated circular mounting hole (8) and two bean-shaped holes (9) situated opposite to each other, while on the surface of the bead (4) there are uniformly distributed two or four identical seats (10) in the form of parallelograms with two punched holes (11) and parallelogram recesses (12) adjacent to them; further, on surfaces of semicircular hollows (5), there are protrusions (13) pointing upwards in the form of truncated cones provided with a bean-shaped holes (14), with conical seats located under said protrusions to be used for mounting blades (2) and (24) and aerators (26 and 27).

3. A working head according to claim 1 **characterized in that** the cutting blade (2) for lawn mowing has the cutting edge sharpened at angle *α* = 15-30°, and opposite to said edge said blade has an arched offset (19) pointing upwards and starting at the point located at about 1/2 of width "L" of the front face (20) of said blade.

4. A working head according to claim 1 **characterized in that** the blade (24) for picking up leafs has arched offset (25) pointing upwards and starting at the point located at about 1/3 of width "K" of the front face (20) of said blade.

5. A working head according to claim 1 **characterized in that** the short aerator assembly (26) for lawn cleaning and aerating consist of a stirrup (28) having, in the side view, the shape of letter "U", lower horizontal shelf of which (29) is connected permanently with a pin (30) threaded on one end, while both vertical shelves (31) perpendicularly positioned with respect to said horizontal shelf are provided with through holes (32) situated coaxially with respect to each other, with bolt (33) located in said holes with bushing (34) planted on said bolt, and with aerator spring (35) positioned on said bushing, said spring consisting of two outer coils of wire (36) joined in the central part by means of an elongated bend (37) with U-shaped profile and elongated straight ends (38) of both coils (36) of said spring protruding outside, while the other end of the bolt (33) is provided with washer (39) and nut (40).

6. A working head according to claim 1 **characterized in that** the long aerator assembly (27) for lawn cleaning and aerating has lower horizontal flat shelf (29) protruding outside the inner vertical shelf (43) of the stirrup (28') of said aerator.

7. A working head according to claim 1 or 2 **characterized in that** the blade (47) for branch cutting and shredding has the shape of parallelogram plate with at least one of its longer sides sharpened at angle *β* = 15-30°, and surface of said blade is provided with two mounting holes (51) with diameter and spacing "N" identical to those of holes (11) made in the seat (10) of the disc body (1).

## Patentansprüche

1. Der Arbeitskopf des Rasenmähers für Gartenarbeiten bestehend aus der rotierenden Drehscheibe (1), ausgestattet mit Messern (2) zum Rasenmähen, die nach außen von ihrer Stirn herausragen und mit der genannten Scheibe trennbar und schwenkbar mit Hilfe der Schrauben (21) verbunden sind, wobei die genannte Scheibe außerdem mit den Einheiten (26 und 27) zur Belüftung von Rasen ausgestattet ist, die zusammen mit den genannten Messern symmetrisch über den Umkreis der genannten Scheibe angeordnet sind, **dadurch gekennzeichnet, dass** diese Drehscheibe (1), die den Körper dieses Arbeitskopfes bildet, trennbar und schwenkbar mit Hilfe der Schrauben (21) angeordnet ist, die in den bohnenähnlichen Löchern (14) des genannten Körpers mit zumindest zwei Schneiden (2) zum Rasenmähen platziert sind, mit der Möglichkeit des Ersatzes gegen mindestens zwei Schneiden (24) zum Sammeln von Blättern und die auch schwenkbar verbunden ist, an den Stellen zwischen den genannten Messern, mit zwei Einheiten der kurzen Rasen-Bodenlüfter (26), die gegen die Einheiten der langen Rasen-Bodenlüfter (27) zur Reinigung und Belüftung der Rasen ersetzt werden können und außerdem die untere Fläche (4) der Scheibe (1) trennbar mit mindestens zwei Schneiden (47) zum Schnitt und Zerkleinerung von Ästen verbunden ist, wobei die in diesem Körper angebauten Messer (2 und 24) sowie die Einheiten der Rasen-Bodenlüfter (26 und 27) symmetrisch über den Umkreis der Stirn dieser Scheibe angeordnet sind und die Schneiden (47) an ihrer unteren Fläche symmetrisch angeordnet sind (4).

2. Der Arbeitskopf nach dem Anspruch 1 **dadurch gekennzeichnet, dass** die Drehscheibe (1) die Gestalt des Kreises mit der aussteifenden Profilsicke (4) nach oben gerichtet mit der ringähnlichen Gestalt aufweist, derer äußerer Rand vier halbkreisförmige Vertiefungen (5) hat, die gleichmäßig über den Umkreis angeordnet sind, deren horizontale Flächen in der Ebene der horizontalen Ringfläche (6) liegen, die am nach oben gebogenen Aussteifungsrand (3) anliegt, im Inneren der Ringsicke (4) befindet sich eine axiale runde Vertiefung (7), deren Boden eine axiale runde Montagebohrung (8) und zwei gegeneinander angeordnete bohnenähnliche Löcher (9) hat, dagegen auf der Oberfläche der Sicke (4) werden zwei oder vier gleichmäßig verteilte identische Schlitze (10) in Form von Parallelogrammen mit zwei geprägten Löchern (11) und daran anliegende Parallelogramm-Aussparungen (12) ausgeführt; außerdem werden auf den Oberflächen der halbförmigen Vertiefungen (5) die nach oben gerichteten Überstände (13) in Form des Kegelstumpfs mit darin ausgeführten bohnenähnlichen Löchern (14) erbracht, und unter den genannten Überständen befinden sich die Kegelschlitze, die zur Befestigung der Messer (2) und (24) sowie der Rasen-Bodenlüfter (26 und 27) dienen.

3. Der Arbeitskopf nach dem Anspruch 1, **dadurch gekennzeichnet, dass** das Messer (2) zum Rasenmähen eine Schneide, die unter dem Winkel *α* = 15-30° geschnitten ist, und gegenüber einen Bogenabsatz (19), der nach oben gerichtet ist, aufweist, der in ca. 1/2 Breite "L" der vorderen Stirn (20) dieses Messers beginnt.

4. Der Arbeitskopf nach dem Anspruch 1, **dadurch gekennzeichnet, dass** das Messer (24) zum Sammeln von Blättern einen Bogenabsatz (25) aufweist, der nach oben gerichtet ist und an der Stelle beginnt, die ca. 1/3 Breite "K" der vorderer Stirn (20) dieses Messers liegt.

5. Der Arbeitskopf nach dem Anspruch 1, **dadurch gekennzeichnet, dass** die Einheit des kurzen Rasen-Bodenlüfters (26) zur Reinigung und Belüftung der Rasen aus der Schelle (28) besteht, die in der Seitenansicht die Form des "U"-Buchstabens hat und derer unterer horizontaler Boden (29) mit dem Bolzen (30) fest verbunden ist, der an einem Ende Gewinde geschnitten hat, dagegen die senkrecht dazu situierten beiden vertikalen Böden (31) Durchgangslöcher (32) aufweisen, die koaxial gegeneinander angeordnet sind, in denen eine Schraube (33) mit einer aufgesetzten Hülse (34) angebracht ist, an der sich eine Feder (35) des Rasen-Bodenlüfters befindet, die äußere Drahtwindungen (36) darstellen, in dem mittleren Teil mit einer verlängerten Biegung (37) mit U-förmigem Profil verbunden sowie nach aussen ausragende Enden (38) der beiden Windungen (36), wobei das andere Ende der Schraube (33) mit einer Scheibe (39) und Mutter (40) ausgestattet ist.

6. Der Arbeitskopf nach dem Anspruch 1, **dadurch gekennzeichnet, dass** die Einheit des langen Rasen-Bodenlüfters (27) zur Reinigung und Belüftung der Rasen einen unteren horizontalen Flacheisenboden (29) aufweist, der erheblich außerhalb des internen vertikalen Bodens (43) der Schelle (28') dieses Bodenlüfters verlängert ist.

7. Der Arbeitskopf nach dem Anspruch 1 oder 2, **dadurch gekennzeichnet, dass** das Messer (47) zum Schneiden und Zerkleinerung von Ästen die Gestalt des Parallelogramms mit mindestens einer längeren Seite, die unter dem Winkel *β* = 15-30° geschärft ist und an dessen Oberfläche sich zwei Montagebohrungen (51) mit dem Durchmesser und Abstand "N" befinden, identisch zu denen, welche die Bohrungen (11) im Schlitz (10) des Scheibenkörpers (1) aufweisen.

## Revendications

1. La tête de travail de tondeuse à gazon composée d'un disque (1) rotatif équipé des couteaux (2) pour la coupe de gazon faisant saillie à l'extérieur de sa face et connectés avec ce disque détachablement et de façon pivotante à l'aide des boulons (21), où ce disque est encore équipé des ensembles (26 et 27) pour aérer une pelouse et ces ensembles ainsi que les couteaux sont distribués symétriquement sur un périmètre de ce disque **caractérisée par le fait que** le disque rotatif (1) constituant le corps de cette tête est connecté détachablement et de façon pivotante à l'aide des boulons (21) placés dans des orifices en forme de haricot (14) de ce corps, avec au moins deux couteaux (2) pour tondre une pelouse avec une possibilité de les remplacer par au moins deux couteaux (24) pour ramasser les feuilles mortes et ce disque est aussi connecté de façon pivotante, aux endroits entre ces couteaux, avec deux groupes d'aérateurs courts (26) qui peuvent être remplacés par les aérateurs longs (27) pour entretient et aération du gazon, et en outre, la surface inférieure (4) du disque (1) est connectée détachablement avec au moins deux couteaux tranchants (47) de coupe et broyage des branches, où les couteaux (2 et 24) montés sur ce corps et les groupes d'aérateurs (26 et 27) sont distribués de façon symétrique sur le périmètre d'une face de ce disque, et les couteaux tranchants (47) sont distribués de façon symétrique sur sa surface inférieure (4).

2. La tête de travail de tondeuse à gazon suivant 1 **caractérisée par le fait que** le disque rotatif (1) a la forme d'une roue avec une nervure raidisseur profilée (4) dirigée vers le haut, en forme semblable à un anneau étant tel que son rebord extérieur a quatre creux semi-circulaires (5) distribués uniformément sur son périmètre et les surfaces horizontales de ces creux sont coplanaires par rapport au plan horizontal annulaire de la surface (6) adjacente à un rebord raidisseur (3) courbé vers le haut et à l'intérieur d'une nervure annulaire (4) se trouve un creux circulaire (7) dont le fond présente un orifice d'assemblage rond et axial (8) et deux orifices en forme de haricot faisant face l'un à l'autre (9), par contre, sur la surface d'une nervure (4) il y a deux ou quatres sièges identiques et répartis uniformément (10) en forme de parallélogramme avec deux orifices estampés (11) ainsi que des recoins (12) équilatéraux adjacentes à ces orifices; en outre, sur la surface des creux semi-circulaires (5) il y a des saillies dirigées vers le haut (13) en forme de cône tronqué avec des orifices en forme de haricot (14) y réalisés, et au-dessous de ces saillies se trouvent des sièges coniques pour y fixer les couteaux (2) et (24) ainsi que les aérateurs (26 et 27).

3. La tête de travail de tondeuse à gazon suivant 1 **caractérisée par le fait que** le couteau (2) pour la coupe de gazon est équipé d'une lame de coupe tronquée sous l'angle *α* = 15-30°, et vis-à-vis d'elle, il y a un déplacement arqué (19) dirigé vers le haut, commençant à environ 1/2 de largeur « L » de la face précédente (20) du couteau.

4. La tête de travail de tondeuse à gazon suivant 1 **caractérisée par le fait que** le couteau (24) pour ramasser les feuilles mortes possède un déplacement arqué (25) dirigé vers le haut et commençant au point se trouvant à environ 1/3 de largeur « K » de la face précédente (20) du couteau.

5. La tête de travail de tondeuse à gazon suivant 1 **caractérisée par le fait que** le groupe d'aérateur court (26) pour entretien et aération du gazon se compose d'un étrier (28) en forme de la lettre «U» en vue latérale dont le plateau horizontal inférieur (29) est connecté de façon permanente avec un tige (30) fileté à une extrémité, pendant que les deux plateaux verticaux (31) disposés perpendiculairement par rapport du plateau horizontal, sont équipés de deux trous traversants (32) situés coaxialement l'un à l'autre avec un boulon (33) qui possède un manchon (34) avec un ressort (35) de l'aérateur placé sur ce manchon, composé des bobines de fils extérieures (36) reliées, au point central, par une courbure allongée (37) de profil en U et par les bouts rallongés sailliés en dehors (38) de ses deux bobines (36), où le deuxième bout d'un boulon (33) est équipé d'une rondelle (39) et d'un écrou (40).

6. La tête de travail de tondeuse à gazon suivant 1 **caractérisée par le fait que** le groupe d'aérateur long (27) pour entretien et aération du gazon possède un plateau horizontal inférieur profilé (29) rallongé remarquablement au délà du plateau intérieur vertical (43) de l'étrier (28') de cet aérateur.

7. La tête de travail de tondeuse à gazon suivant 1 ou 2 **caractérisée par le fait que** le couteau (47) tranchant pour boyer de branches a la forme d'une planche parallélogramme avec au moins un côté plus long aiguisé sous un angle *β* = 15-30°, et sur sa surface se trouvent des orifices de montage (51) d'un diamètre et d'un epacement "N" identiques à ceux des orifices (11) faits dans le siège (10) du corps d'un disque (1).
